# EUROPEAN PATENT SPECIFICATION

(11) **EP 1 770 905 B1**
(45) Date of publication and mention of the grant of the patent: **08.12.2010**
(21) Application number: 05021316.4
(22) Date of filing: 29.09.2005
(51) Int. Cl.: H04L 12/24

(54) **Detecting inactive links in a communication network**
Erkennung der unaktivierten Verbindungen in einem Kommunikationsnetz
Détection des liasons inactifs dans un réseau de communication

(43) Date of publication of application: 04.04.2007
(73) Proprietor: Nokia Siemens Networks GmbH & Co. KG, 81541 München (DE)
(72) Inventor: Ribeiro, Alexandre, 2615-063 Alverca (PT)

(56) References cited:
- US-A1- 2001 021 177
- US-A1- 2002 154 606
- US-B1- 6 330 229

## Description

The invention relates to a method and a management system for detecting inactive links in a communication network.

The invention lies on the field of networking and communications. More specifically, the invention enhances network management functions.

Recent developments in networking have turned data networks into multimedia networks. Thus, future data networks need to guarantee different kinds of services with deviating requirements. Traditional data transmission should possibly not incur the loss of data. By contrast, higher data losses are acceptable for voice transmission, but the delay is much more crucial. Finally, multimedia applications require synchronizing voice and data.

Thus, network management needs to maintain a good control over the network. Network parameters have to be adjusted as traffic fluctuates. Real-time traffic will necessitate prioritizing and policing of data. To deal with these requirements network management needs to be informed about network properties. Network topology is one of the essential factors that determine the behaviour of a network.

Modern networks are often modelled as nodes interconnected by links. These nodes usually comprise end points (such as stations, hosts, or terminals) and switches. The function of switches is to route or relay data to their destination, i.e. to an endpoint. Routing is performed by means of addresses. The data traffic (mostly data packets, data frames, or cells) comprises address information relating the data to their source (i.e. the terminal or end points generating the traffic) and their destination (i.e. the terminal or end point to which the traffic is to be delivered). Switches rely on address tables or forward data bases (FDB) to determine the port or interface of the switch on which the traffic has to be forwarded to its destination. Switches that operate on level 2 of the OSI reference model are called L2 switches or bridges, switches operating on level 3 are called L3 switches or routers. The address information used typically consists of L2 or L3 addresses, such as Ethernet addresses or IP addresses. Network management has to know how the switches interconnect, i.e. the topology, to configure the network according to service requirements.

Hence, the network topology of a communication network constitutes essential input information for the network management to perform its functions. A straightforward way to provide the network management with topology information is to enter it manually, e.g. by help of a graphical editor.

Network-controlled collection of topology information has been proposed for networks employing a spanning tree protocol (STP protocol). The U.S. patent application publication 2002/0154606 discloses a method for determining the topology of a network based on the collection of address table data from the core network devices of a network. By means of the collected data a tree is built to determine the network topology. This method and other methods generally assume the network topology to be loop-free. Loop-freeness usually (e.g. for Ethernet networks) is important to ensure transparency of the network (i.e. network specifics are concealed from the endpoints). Loops destroy the transparency and can lead to broadcast storms that unduly burden the network.

A common protocol that ensures loop-freeness is the STP protocol (spanning-tree protocol). Several spanning tree algorithms have been developed to provide for loop-free transmission of data. A spanning tree usually identifies a loop-free subset of links to be used for transmission of data. STP protocols employ STP messages called BPDUs (Bridge Protocol Data Units) to block or discard all the traffic for specific ports in order to avoid loops. Thus, there will be only one logical path between two networks even if they are physically connected in more than one way. Spanning tree protocols that are currently in use are IEEE 802.1d (spanning tree protocol or STP protocol), IEEE 802.1w (rapid spanning tree protocol or RSTP protocol), and IEEE 802.1s (multiple spanning tree protocol or MSTP protocol).

In an environment where protocols restrict the use of the (physically) available links to ensure the loop-freeness of data transmission, an inactive or deactivated link cannot be detected by network management via traditional methods. In view of reconfiguration or redeployment the network management should be enabled to localize inactive links, e.g. to be able to put them in use again when remodelling spanning tree instances.

Inactive links may be discovered by inspection of STP parameters for every port of the network's switches and a matching of blocked ports to identify a corresponding inactive link. This way to proceed has following disadvantages:
- The inspection of the STP parameter is a resource-intensive way to look for inactive links.
- There is a dependence on the employed STP protocol. Migration to other STP software will require readjusting the mechanism for identifying inactive links.
- The matching of blocked ports may be not unequivocal thus rendering the result of the detection of inactive links ambiguous.

Hence, there is a need for improvements.

The aim of the invention is to propose a flexible and economical method for detecting inactive links in a communication network comprising interconnected switches.

The invention relies on the observation that a link can be located by finding the two ports where the link terminates. Usually, a link that connects two switches is deactivated by blocking the ports on either switch that interface to the link. According to the present method a blocked port is found and shut down. As a consequence, a port on the other end of the link will assume a link-down status, if there is a link connected to the shut-down port. Based on this link-down status the port is identified so that the presence and the position of an inactive link can be known from the two ports at opposite ends of the link. After identification of the link the inactivated or shut down port may be reactivated.

The present method allows for locating inactive links in a flexible and economic way. The localisation is unobtrusive with respect to traffic transmitted over the network, i.e. there is no need to interfere with concurrent transmission services over activated links. In addition, the present method does not rely on specifics of a protocol used to enforce loop-freeness, e.g. some STP protocol.

The present method may be used to detect all inactive links of a network by systematically listing and checking ports in a blocking state.

According to an embodiment of the present invention, a link-down state is reported to network management, e.g. via a SNMP (simple network management protocol) trap. In this case, a maximum time period may be specified for reporting the link down status after the deactivation of the first port. Then the absence of an inactive link at the first port is assumed if no link-down status is reported before the time period's expiration.

Alternatively to the above embodiment, the port status of the networks' switches may be examined for a link-down status so as to identify the second port. The first port may be reactivated after the examination, whereby the link-down status of a second switch is changed to a link-up status, so that results of consecutive examinations of port status will not include ports for which an inactive link was already identified.

The invention also comprises a management system with means for performing the steps of
- identifying ports of said switches that are in a blocking state,
- deactivating a first port in the blocking state, whereby a second port connected via an inactive link is caused to assume a link down status,
- identifying the second port with the link down status, and
- inferring the presence of an inactive link connected to the first port which was deactivated and the second port with the link down status.

Software, firmware, and hardware may be used to enhance a management system (e.g. a dedicated computer station) with functions for performing the above steps.

Below, an embodiment of the present invention is described with reference to figures. The figures show
Fig. 1: A network scenario with three switches and two stations for exemplifying the impact of loops in point-to-point network architecture
Fig. 2: A network scenario corresponding to Fig. 1 where a port interfacing to an inactive link has been deactivated according to the present invention

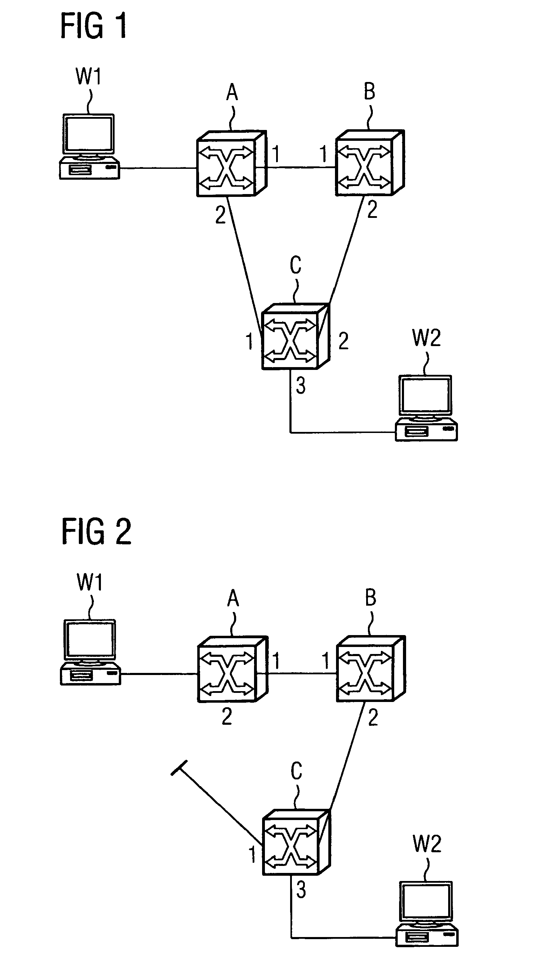

Fig. 1 shows three switches A, B, and C which interconnect two stations W1 and W2. The exchange of messages between these entities is based on the Ethernet protocol. Switches A and B each are fitted with three ports 1, 2, 3 connecting them to the other two switches and to the stations W1 and W2, respectively. Switch B is connected to the other two switches via the ports 1 and 2. The connections of the three switches A, B, and C evidently form a loop. For the network to be loop-less a STP protocol is employed that restricts the use of links. The link between the switches A and C is B. The respective ports (port 2 from switch A and port 1 from switch C) are blocked. Thus, loop- deactivated, i.e. all traffic that arrives at switch C and that is sent from station W2 is forwarded via port 2 to switch B. Accordingly, traffic sent from station W1 to switch A is relayed via port 1 to station freeness is guaranteed by help of a STP protocol.

In order to find deactivated links the network management detects and lists shut-down ports, such as port 2 from switch A and port 1 from switch C. Thus, port 2 from switch A is identified as being blocked and taken as a starting point for examining the existence of a deactivated link. In a first step, port 2 of switch A is shut down. This port deactivation causes the port 1 of switch C to assume a link-down status. This behaviour of port 1 can be triggered by Layer 1 failure detection mechanisms defined by the IEEE standards, such as the Far End Fault Indication function (FEFI) for 100BaseFX interfaces and the Auto-Negotiation function for 100BaseTX/1000BaseX interfaces as defined in IEEE 802.3. Within IEEE 802.3 the carrier medium is sensed by the switches connected to the medium. For instance, an idle signal may be transmitted and detected during idle times. Evidently, the shut-down of a switch interrupts the transmission of the idle signal, so that the medium is no longer sensed by the opposite end. As a consequence, the corresponding port assumes a link-down state.

Other triggers to generate a link-down status could be used, such as explicit signalling of a port shut-down or a time-out of a timer. For instance, the deactivation of the port may induce the protocol layers below the STP protocol to send a DISCONNECT message to its counterpart, i.e. the port 1 (switch C) on the other end of the inactive link.

Link indications such as "link-down" are discussed in the RFC draft "Architectural Implications of Link Indications" by B. Aboba. According to this document link indication constitute information provided by the link layer to higher layers regarding the state of the link. In addition to "Link Up" and "Link Down" indications, other relevant link information may include the current link rate (which may vary with time and location), link identifiers, and statistics relating to link performance (such as the delay or loss rate).

A link-down indication corresponds to an event provided by the link layer that signifies a state change associated with an interface (or port). The state change implies that the interface is no longer being capable of communicating data frames. The trigger for this indication is usually set in such a way that transient periods of high frame loss are not sufficient for link-down signalling.

The link-down status is reported to the network management by means of a linkDown trap which is defined in RFC 1157 (Simple Network Management Protocol).

A strategy implicit in the SNMP is that the monitoring of network state at any significant level of detail is accomplished primarily by polling for appropriate information on the part of the monitoring center(s). A limited number of unsolicited messages (traps) guide the timing and focus of the polling.

The linkDown trap signifies that the sending protocol entity recognizes a failure in one of the communication links represented in an agent's configuration.

The Trap-PDU (PDU: packet data unit) of type linkDown contains as the first element of its variable-bindings, the name and value of the if Index (if: interface) instance for the affected interface.

Thus, the affected interface or port is identified by means of the linkDown trap. Network management can combine the information on the shut-down port 2 and the port 1 with link-down status to localise the inactive link that connects the corresponding two switches A and C.

## Claims

1. A method for detecting inactive links in a communication network comprising interconnected switches (A, B, C), comprising the steps of
- identifying ports (1, 2) of said switches (A, B, C) that are in a blocking state,
- deactivating a first port (2) in the blocking state, whereby a second port (1) connected via an inactive link is caused to assume a link-down status,
- identifying the second port (1) with the link-down status, and
- inferring the presence of an inactive link connected to the first port (2) which was deactivated and the second port (1) with the link down status.

2. The method of claim 1, further comprising the steps of
- listing ports that are in a blocking state, and
- checking all listed ports for inactive links.

3. The method of claim 1 or 2, further comprising the step of
- transmitting a report message to the network management reporting said link down status, whereby the second port (1) is identified.

4. The method of claim 3, wherein
- a SNMP trap is used to report a link down status.

5. The method of claim 3 or 4, wherein
- a maximum time period is specified for reporting the link down status after the deactivation of the first port (2), and
- inferring the absence of an inactive link at the first port (2) if no link down status is reported before the time period's expiration.

6. The method of claim 1 or 2, wherein
- the port status of the networks' switches (A, B, C) is examined for a link down status so as to identify the second port (1).

7. The method of claim 6, wherein
the first port (2) is reactivated after the examination, whereby the link down status of a second switch is changed.

8. A management system comprising means for performing the steps of
- identifying ports of switches (A, B, C) that are in a blocking state,
- deactivating a first port (2) in the blocking state, whereby a second port (1) connected via an inactive link is caused to assume a link down status,
- identifying the second port (1) with the link down status, and
- inferring the presence of an inactive link connected to the first port (2) which was deactivated and the second port with the link down status.

## Patentansprüche

1. Verfahren zum Detektieren inaktiver Strecken in einem Kommunikationsnetz, das verbundene Switches (A, B, C) umfasst, mit den folgenden Schritten:
- Identifizieren von Ports (1, 2) der Switches (A, B, C), die sich in einem Blockierungszustand befinden,
- Deaktivieren eines ersten Ports (2) in dem Blockierungszustand, wodurch bewirkt wird, dass ein über eine inaktive Strecke verbundener zweiter Port (1) einen Strecke-Down-Status annimmt,
- Identifizieren des zweiten Ports (1) mit dem Strecke-Down-Status und
- Schließen auf die Anwesenheit einer inaktiven Strecke, die mit dem ersten Port (2), der deaktiviert wurde, und dem zweiten Port (1) mit dem Strecke-Down-Status verbunden ist.

2. Verfahren nach Anspruch 1, ferner mit den folgenden Schritten:
- Auflisten von Ports, die sich in einem Blockierungszustand befinden, und
- Prüfen aller aufgelisteten Ports auf inaktive Strecken.

3. Verfahren nach Anspruch 1 oder 2, ferner mit dem folgenden Schritt:
- Senden einer Meldungsnachricht zu der Netzwerkverwaltung, die den Strecke-Down-Status meldet, wodurch der zweite Port (1) identifiziert wird.

4. Verfahren nach Anspruch 3, wobei
- ein SNMP-Trap zum Melden eines Strecke-Down-Status verwendet wird.

5. Verfahren nach Anspruch 3 oder 4, wobei
- ein maximaler Zeitraum zum Melden des Strecke-Down-Status nach der Deaktivierung des ersten Ports (2) spezifiziert wird und
- Schließen auf die Abwesenheit einer inaktiven Strecke an dem ersten Port (2), wenn vor dem Ablauf des Zeitraums kein Strecke-Down-Status gemeldet wird.

6. Verfahren nach Anspruch 1 oder 2, wobei
- der Portstatus der Switches (A, B, C) der Netze auf einen Strecke-Down-Status untersucht wird, um so den zweiten Port (1) zu identifizieren.

7. Verfahren nach Anspruch 6, wobei
der erste Port (2) nach der Untersuchung reaktiviert wird, wodurch der Strecke-Down-Status eines zweiten Switch geändert wird.

8. Verwaltungssystem, das Mittel zum Ausführen der folgenden Schritte umfasst:
- Identifizieren von Ports von Switches (A, B, C), die sich in einem Blockierungszustand befinden,
- Deaktivieren eines ersten Ports (2) in dem Blockierungszustand, wodurch bewirkt wird, dass ein über eine inaktive Strecke verbundener zweiter Port (1) einen Strecke-Down-Status annimmt,
- Identifizieren des zweiten Ports (1) mit dem Strecke-Down-Status und
- Schließen auf die Anwesenheit einer inaktiven Strecke, die mit dem ersten Port (2), der deaktiviert wurde, und dem zweiten Port (1) mit dem Strecke-Down-Status verbunden ist.

## Revendications

1. Procédé de détection de liaisons inactives dans un réseau de communication comprenant des commutateurs interconnectés (A, B, C), comprenant les étapes de
- identification de ports (1, 2) desdits commutateurs (A, B, C) qui sont en un état de blocage,
- désactivation d'un premier port (2) en l'état de blocage, d'où il résulte qu'un deuxième port (1) connecté par l'intermédiaire d'une liaison inactive est fait assumer un statut de liaison interrompue,
- identification du deuxième port (1) avec le statut de liaison interrompue, et
- inférence de la présence d'une liaison inactive connectée au premier port (2) qui a été désactivé et au deuxième port (1) avec le statut de liaison interrompue.

2. Procédé selon la revendication 1, comprenant en outre les étapes de
- listage des ports qui sont en un état de blocage, et
- contrôle de tous les ports listés en termes de liaisons inactives.

3. Procédé selon la revendication 1 ou 2, comprenant en outre l'étape de
- transmission d'un message de rapport à la gestion de réseau rapportant ledit statut de liaison interrompue, d'où il résulte que le deuxième port (1) est identifié.

4. Procédé selon la revendication 3, dans lequel
- une alerte SNMP est utilisée pour rapporter un statut de liaison interrompue.

5. Procédé selon la revendication 3 ou 4, dans lequel
- une période de temps maximum est spécifiée pour rapporter le statut de liaison interrompue après la désactivation du premier port (2), et
- l'inférence de l'absence d'une liaison inactive au niveau du premier port (2) si aucun statut de liaison interrompue n'est rapporté avant l'expiration de la période de temps.

6. Procédé selon la revendication 1 ou 2, dans lequel
- le statut de ports des commutateurs (A, B, C) du réseau est examiné en termes de statut de liaison interrompue de façon à identifier le deuxième port (1).

7. Procédé selon la revendication 6, dans lequel le premier port (2) est réactivé après l'examen, d'où il résulte que le statut de liaison interrompue d'un deuxième commutateur est changé.

8. Système de gestion comprenant des moyens pour exécuter les étapes de
- identification de ports de commutateurs (A, B, C) qui sont en un état de blocage,
- désactivation d'un premier port (2) en l'état de blocage, d'où il résulte qu'un deuxième port (1) connecté par l'intermédiaire d'une liaison inactive est fait assumer un statut de liaison interrompue,
- identification du deuxième port (1) avec le statut de liaison interrompue, et
- inférence de la présence d'une liaison inactive connectée au premier port (2) qui a été désactivé et au deuxième port avec le statut de liaison interrompue.
